# DEMANDE DE BREVET EUROPEEN

(11) **EP 1 569 010 A1**
(43) Date de publication de la demande: **31.08.2005**
(21) Numéro de dépôt: 05290277.2
(22) Date de dépôt: 08.02.2005
(51) Int. Cl.: G01S 13/90

(54) **Radar à synthèse d'ouverture pour l'observation de zones de longueur accrue**

(30) Priorité: 25.02.2004 FR 0450347
(71) Demandeur: ALCATEL, 75008 Paris (FR)
(72) Inventeur: Martinerie, Francis, 31860 Labarthe sur Leze (FR); Deligny, Bernard, 31270 Cugnaux (FR); Ramongassie, Sophie, 31120 Lacroix Falgarde (FR)
(74) Mandataire: Smith, Bradford Lee

(57) **Abrégé**

Un dispositif est dédié à la mise en oeuvre d'un radar imageur à synthèse d'ouverture, embarqué sur un engin (S) et comprenant une antenne radar (A) chargée d'observer une zone suivant une ligne de visée radar (LV) définie à chaque instant par un angle au nadir et un azimut. Ce dispositif comprend des moyens de commande chargés, lors de chaque phase d'acquisition du radar imageur, survenant pendant le défilement de l'engin (S) dans une direction choisie (X-X'), de faire varier de l'arrière vers l'avant de l'engin (S) l'azimut de la ligne de visée radar (LV) par rapport à la direction de défilement (X-X'), de manière à permettre l'obtention d'une image, de la zone observée, étendue suivant la direction de défilement.

## Description

L'invention concerne le domaine des radars imageurs à synthèse d'ouverture, plus connus sous l'acronyme SAR (pour « Synthetic Aperture Radar »), et plus particulièrement ceux qui sont embarqués sur des engins aéroportés ou spatiaux, tels que des avions, des satellites d'observation ou des « navettes » spatiales.

Les radars imageurs embarqués, à synthèse d'ouverture, ont été initialement développés pour acquérir des images de zones d'observation présentant un niveau de détection (ou résolution radiométrique, c'est-à-dire une échelle de contraste d'image) et/ou une résolution (c'est-à-dire une taille de pixel) optimisé(s). De tels radars imageurs requièrent, d'une première part, de grandes antennes radar, généralement de type antenne réseau à balayage électronique, dont la surface est généralement comprise entre une et plusieurs dizaines de mètres carrés, d'une deuxième part, d'importantes ressources d'énergie et de mémorisation de données, et d'une troisième part, une capacité à effectuer des acquisitions sur des durées importantes, typiquement jusqu'à plusieurs minutes. Jusqu'à récemment, seuls des satellites de plus d'une tonne pouvaient supporter de tels radars imageurs SAR.

Il a cependant été proposé d'embarquer des radars imageurs SAR sur des petits satellites, de masse typiquement inférieure à une tonne, voire même sur des micro-satellites (masse inférieure à 200 kg).

Or, du fait de cette limitation de masse, d'une première part, l'antenne ne peut présenter qu'une surface de quelques mètres carrés et une masse de quelques dizaines de kilogrammes qui interdisent son utilisation sous la forme d'une antenne réseau à balayage électronique, d'une deuxième part, les ressources d'énergie et les possibilités de contrôle thermique sont fortement réduites, limitant ainsi le nombre et la durée des acquisitions par orbite, et d'une troisième part, les capacités de mémorisation, ainsi qu'éventuellement les capacités de transmission, sont limitées.

Il en résulte que la longueur maximale d'une image (suivant la direction de défilement de l'engin) est limitée par la durée maximale d'acquisition (ou de prise de vue), laquelle dépend à la fois de la technologie de l'antenne (contraintes thermiques de mise en oeuvre), de la capacité de mémorisation et de l'énergie disponible. Typiquement, dans le cas d'une antenne utilisant des tubes à ondes progressives (ou TOP), la durée maximale d'acquisition est limitée par les contraintes d'échauffement du tube.

L'invention a pour but de permettre une augmentation de la longueur des images acquises à l'aide de radars imageurs SAR embarqués, notamment sur des petits satellites, moyennant une éventuelle dégradation de leur résolution. La longueur s'entend ici par rapport à la direction de défilement (ou de déplacement) du satellite.

Elle propose à cet effet un dispositif de mise en oeuvre d'un radar imageur à synthèse d'ouverture, embarqué sur un engin spatial ou aéroporté et comprenant une antenne radar permettant d'observer une zone suivant une ligne de visée radar définie à chaque instant par une élévation au sol (ou de façon équivalente, un angle au nadir) et un azimut.

Ce dispositif se caractérise par le fait qu'il comprend des moyens de commande chargés, lors de chaque phase d'acquisition du radar imageur, survenant pendant le défilement de l'engin dans une direction choisie, de faire varier de l'arrière vers l'avant de l'engin l'azimut de la ligne de visée radar par rapport à la direction de défilement, afin de permettre l'obtention d'une image, de la zone observée, étendue suivant la direction de défilement

Les moyens de commande peuvent être agencés de manière à adresser aux moyens de positionnement de l'engin des instructions destinées à modifier son attitude dans l'espace pour faire varier l'azimut.

En variante ou en complément les moyens de commande peuvent être agencés pour ordonner le dépointage de l'antenne de manière à faire varier l'azimut. Dans ce cas, le dépointage est au moins en partie de type mécanique (lorsque le radar imageur comprend des moyens de contrôle de l'orientation de l'antenne) et/ou au moins en partie de type électronique (lorsque l'antenne est une antenne réseau à balayage électronique).

Par ailleurs, le dispositif est compatible avec un fonctionnement du radar imageur en mode « Scansar » ou « Stripmap ». Dans ce dernier mode, tout comme dans le mode standard de l'invention, le radar imageur est contraint par le dispositif à présenter un angle au nadir de sa ligne de visée radar sensiblement constant.

L'invention propose également un radar imageur équipé d'un dispositif du type de celui présenté ci-avant, ainsi qu'un engin aéroporté ou spatial, comme par exemple un satellite d'observation, équipé d'au moins un tel radar imageur, ou d'un radar imageur couplé à un dispositif du type de celui présenté ci-avant.

D'autres caractéristiques et avantages de l'invention apparaîtront à l'examen de la description détaillée ci-après, et des dessins annexés, sur lesquels :
- la figure 1 illustre de façon schématique un exemple de défilement de satellite d'observation selon l'invention, et la zone observée correspondante, et
- la figure 2 illustre de façon très schématique un exemple de réalisation d'un satellite d'observation équipé d'un radar imageur SAR et d'un dispositif selon l'invention.

Les dessins annexés pourront non seulement servir à compléter l'invention, mais aussi contribuer à sa définition, le cas échéant.

L'invention a pour objet de permettre une augmentation, et éventuellement une maximisation, de la longueur des images obtenues à partir des données d'image acquises à l'aide d'un radar imageur de type SAR, embarqué.

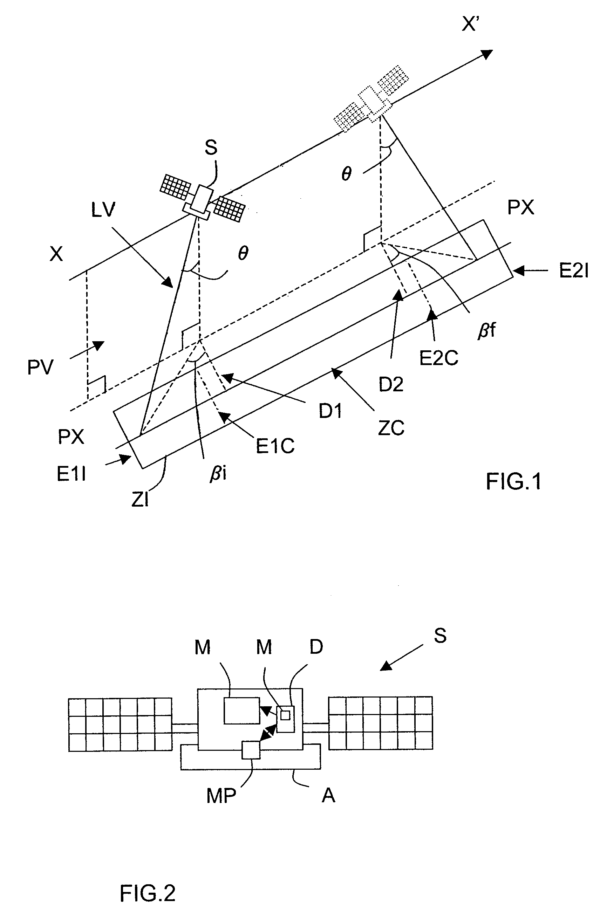

On se réfère tout d'abord à la figure 1 pour présenter un exemple d'utilisation d'un radar imageur SAR embarqué dans un engin spatial S, agencé sous la forme d'un satellite de petite masse, typiquement inférieure à une tonne, et équipé d'un dispositif selon l'invention.

Bien entendu, l'utilisation de l'invention n'est pas limitée à ce seul type d'engin. Elle peut en effet être envisagée dans tout type d'engin spatial ou aéroporté, et notamment dans des avions, des drones ou des navettes spatiales, dès lors qu'il comprend au moins un radar imageur SAR.

Le fonctionnement d'un radar imageur à synthèse d'ouverture, ou SAR (pour « Synthetic Aperture Radar »), est bien connu de l'homme de l'art. Par conséquent, il ne sera pas décrit, ici, en détail. Il est simplement rappelé qu'un radar imageur SAR est un radar chargé d'acquérir à des instants successifs, à l'aide d'une antenne A (éventuellement à balayage électronique), des données d'échos en distance et en doppler (ou azimut) dans le domaine des micro-ondes, destinées à permettre l'obtention d'images de haute résolution. La résolution dans la direction dite « distance » est obtenue par transmission d'une forme d'onde choisie, tandis que la résolution dans la direction dite « azimut » est obtenue par une ouverture synthétique. Une fois les données acquises, elles font l'objet de traitements destinés à remettre en cohérence les signaux successivement reçus en vue de la formation d'images radar.

Pour acquérir les données d'échos, l'engin S, dans lequel est embarqué le radar imageur SAR, survole, suivant une direction sensiblement rectiligne (axe X-X' de la figure 1), une région dont une zone rectangulaire ZC doit faire l'objet d'une image. Le déplacement de l'engin S est généralement appelé « défilement ». La zone ZC est généralement observée par un faisceau micro-ondes dont la direction principale, appelée ligne de visée radar LV, fait un angle θ (appelé angle au nadir) par rapport à la verticale locale à l'engin S. Par conséquent, la projection orthogonale sur le sol de la trajectoire de l'engin S définit une droite PX-PX' qui est décalée par rapport à la zone observée ZC.

Dans un mode de fonctionnement classique, comme par exemple le mode dit « Stripmap », le plan qui contient la ligne de visée radar LV et qui est sensiblement perpendiculaire au sol (et donc à la zone ZC) est également sensiblement perpendiculaire au plan vertical PV contenant X-X' et PX-PX' (il contient alors la droite D1 matérialisée en pointillés). Par conséquent, l'azimut associé à la ligne de visée radar LV est sensiblement constant (en pratique, il est soit nul, soit pointé de façon à compenser l'effet Doppler provoqué par la rotation de la terre).

L'acquisition des données se fait entre deux instants choisis, correspondant au passage de l'engin S au niveau des droites D1 et D2 qui définissent presque les extrémités arrière E1C et avant E2C de la zone ZC (en fait la longueur de l'image de la zone ZC (suivant la direction PX-PX') est légèrement supérieure à la distance séparant les droites D1 et D2). Par conséquent, l'attitude de l'engin S, c'est-à-dire son orientation dans l'espace, ne varie pas en théorie (aux micro-modifications près induites par d'éventuelles corrections de trajectoire) pendant toute la phase d'acquisition.

Des variantes de modes de fonctionnement existent, et notamment les modes dits « Spotlight » et « Scansar ». Le mode Spotlight est destiné à améliorer la résolution, et fournit des images de dimensions réduites. Il consiste à modifier la ligne de visée radar LV, de façon à maintenir constante la zone visée (angle θ constant), en faisant varier le dépointage de l'antenne A lorsqu'elle constitue une antenne réseau à balayage électronique. Plus précisément, contrairement au mode Stripmap, la ligne de visée radar LV pointe initialement vers l'avant de l'engin S, puis elle tourne autour d'un axe de rotation rattaché à l'engin S, afin de pointer progressivement vers l'arrière dudit engin S.

Le mode Scansar est destiné à améliorer la couverture, et fournit des images dont la largeur (suivant la direction parallèle aux droites D1 et D2) est accrue comparée au mode Stripmap. Il consiste à modifier l'angle au nadir (angle θ) de la ligne de visée radar LV, tout en maintenant constant son azimut, en faisant varier le dépointage de l'antenne A lorsqu'elle constitue une antenne dont le diagramme de directivité est pilotable en élévation, ce qui est le cas par exemple des antennes réseau à balayage électronique.

Comme indiqué précédemment, l'invention offre un nouveau mode de fonctionnement, dit étendu (ou « Mode Strech »), permettant d'augmenter la longueur des images et donc la longueur des zones observées, éventuellement au détriment de leur résolution.

A cet effet, et comme illustré sur la figure 2, l'invention propose un dispositif D de mise en oeuvre d'un radar imageur SAR, comprenant un module de commande MC, couplé aux moyens de positionnement (moteurs ou actuateurs) M de l'engin S et/ou aux moyens de contrôle de pointage (ou d'orientation) de l'antenne radar MP, lorsque celle-ci est motorisée ou constitue une antenne réseau à balayage (par exemple dans le cas d'un gros satellite).

Ce module de commande MC est chargé d'adresser des instructions aux moteurs (ou actuateurs) M de l'engin S et/ou aux moyens de contrôle de pointage (ou d'orientation) de l'antenne radar MP, pendant chaque phase d'acquisition, afin de faire varier, de l'arrière vers l'avant de l'engin S, l'azimut de la ligne de visée radar LV par rapport à la direction de défilement X-X'.

Plus précisément, et comme illustré sur la figure 1, au début de la phase d'acquisition, l'engin S est placé au niveau de la droite D1 et sa ligne de visée radar LV est orientée vers l'arrière (par rapport à son sens de défilement). Le plan vertical qui contient la ligne de visée radar LV est alors désorienté d'un angle initial βi par rapport au plan vertical contenant D1. En d'autres termes, l'azimut de la ligne de visée radar LV présente une valeur choisie, non nulle, fonction de la valeur de l'angle initial βi (qui est alors négative).

Lorsque l'engin S se déplace entre D1 et D2, l'orientation β de la ligne de visée radar LV varie progressivement pour atteindre, à un stade intermédiaire, une valeur nulle (β = 0), puis être égale à un angle final βf (positif) par rapport au plan vertical contenant D2 à la fin de la phase d'acquisition (lorsque l'engin S est placé au niveau de la droite D2). A ce stade final, la ligne de visée radar LV est donc orientée vers l'avant de l'engin S (par rapport à son sens de défilement).

En d'autres termes, entre D1 et D2 l'azimut de la ligne de visée radar LV décroît d'une valeur négative, correspondant à l'angle initial βi, jusqu'à la valeur nulle intermédiaire, puis croît jusqu'à une valeur positive, correspondant à l'angle final βf. La vitesse de balayage du sol est donc plus élevée que dans le cas du mode stripmap, permettant à durée d'observation égale de couvrir une longueur d'image plus importante.

Préférentiellement, à la fin d'une phase d'acquisition le module de commande MC ordonne le repositionnement de la ligne de visée radar LV selon l'angle initial βi, ou suivant le plan perpendiculaire au vecteur vitesse du satellite, ou plus généralement suivant la direction de visée nominalement prévue dans la séquence d'opérations de l'engin spatial ou aéroporté.

Par ailleurs, les données d'échos acquises par le radar imageur SAR, sous le contrôle d'un dispositif D selon l'invention, nécessitent un traitement particulier. Il faut en effet tenir compte du décalage du doppler moyen, des migrations, des corrections d'amplitude et des ambiguïtés d'azimut. Ce traitement consiste en une adaptation aux conditions particulières de prise de vue du traitement SAR conventionnel.

Les valeurs absolues des angles initial βi et final βf ne sont pas forcément égales. Ces valeurs absolues sont choisies en fonction de la longueur de la zone ZI objet de l'acquisition, et plus précisément de la distance séparant ses extrémités arrière E1I et avant E2I. La somme des distances E1I-E1C et E2C-E2I permet de quantifier l'augmentation de longueur obtenue.

Lorsque l'engin S est un petit satellite, l'augmentation de longueur, et donc les valeurs des angles initial βi et final βf, sont limitées par ses capacités en termes de puissance énergétique disponible, de mémorisation de données d'échos, de régulation thermique, et de manoeuvre et/ou de dépointage d'antenne. A capacités égales, le nombre de données acquises dans le mode Stripmap est sensiblement égal au nombre de données acquises dans le mode étendu (ou « Mode Strech ») selon l'invention. Par conséquent, les dimensions des zones ZC et ZI étant différentes, la résolution du mode étendu est dégradée par rapport à la résolution du mode Stripmap. On peut noter que cette dégradation peut ne pas être sensible lorsque la résolution du mode Stripmap est bridée et que les capacités du satellite S permettent une légère augmentation du nombre de données acquises. A capacités constantes, le radar imageur SAR peut donc permettre de maximiser la longueur de la zone d'acquisition, lorsqu'il comprend un, ou se trouve sous le contrôle d'un, dispositif D selon l'invention.

Comme indiqué ci-dessus, le contrôle de la ligne de visée radar LV peut s'effectuer de différentes façons.

Une première façon est exclusivement de type mécanique. Elle est particulièrement bien adaptée aux radars imageurs SAR les plus simples, c'est-à-dire ne disposant ni de moyens de contrôle de l'orientation de l'antenne MP, ni d'antenne réseau à balayage électronique. Elle consiste à agencer le module de commande MC afin qu'il transmette aux actuateurs (roue à inertie, magnétotorqueurs, tuyères, moteurs) M de l'engin S des instructions de nature à modifier mécaniquement son attitude dans l'espace.

Une deuxième façon est également exclusivement de type mécanique. Elle est particulièrement bien adaptée aux radars imageurs SAR disposant de moyens de contrôle de l'orientation de l'antenne MP (via des mécanismes motorisés spécifiques), mais pas d'antenne réseau à balayage électronique. Elle consiste à agencer le module de commande MC afin qu'il transmette aux actuateurs M de l'engin S et/ou aux moyens de contrôle de l'orientation de l'antenne MP des instructions de nature à modifier mécaniquement l'attitude de l'engin S dans l'espace et/ou l'orientation de l'antenne A.

Une troisième façon est exclusivement électronique. Elle est particulièrement bien adaptée aux radars imageurs SAR disposant d'une antenne réseau à balayage électronique, mais pas de moyens de contrôle de l'orientation de l'antenne MP. Elle consiste à agencer le module de commande MC afin qu'il transmette aux moyens de contrôle du balayage électronique des instructions de nature à modifier électroniquement le dépointage de l'antenne A.

Une quatrième façon est à la fois mécanique et électronique. Elle est particulièrement bien adaptée aux radars imageurs SAR disposant d'une antenne réseau à balayage électronique, mais pas de moyens de contrôle de l'orientation de l'antenne MP. Elle consiste à agencer le module de commande MC afin qu'il transmette aux actuateurs M de l'engin S et aux moyens de contrôle du balayage électronique des instructions de nature, d'une part, à modifier mécaniquement l'attitude de l'engin S dans l'espace, et d'autre part, à modifier électroniquement le dépointage de l'antenne A.

Enfin, une cinquième façon est également à la fois mécanique et électronique. Elle est particulièrement bien adaptée aux radars imageurs SAR disposant d'une antenne réseau à balayage électronique et de moyens de contrôle de l'orientation de l'antenne MP. Elle consiste à agencer le module de commande MC afin qu'il transmette aux moyens de contrôle du balayage électronique et aux actuateurs M de l'engin S et/ou aux moyens de contrôle de l'orientation de l'antenne MP des instructions de nature, d'une part, à modifier électroniquement le dépointage de l'antenne A, et d'autre part, à modifier mécaniquement l'attitude de l'engin S dans l'espace et/ou l'orientation de l'antenne A.

Il ressort de ce qui précède que l'invention s'applique aussi bien aux radars imageurs SAR à antenne classique qu'aux radars imageurs SAR à antenne réseau à balayage électronique. Par conséquent, le mode de fonctionnement étendu, selon l'invention, peut être utilisé seul ou bien en combinaison avec un autre mode, tel que le mode Scansar, notamment. Il présente l'avantage de ne pas imposer de contraintes particulières en termes d'architecture de l'engin S, y compris lorsque celui-ci est initialement conçu pour fonctionner selon un mode tel que Spotlight ou Scansar. Il suffit en effet, simplement, que l'engin S dispose de la capacité de modifier son attitude dans l'espace conformément à l'invention et/ou que l'antenne puisse être dépointée conformément à l'invention.

Le module de commande MC du dispositif D selon l'invention peut être réalisé sous la forme de circuits électroniques, de modules logiciels (ou informatiques), ou d'une combinaison de circuits et de logiciels. Par conséquent, le dispositif D peut être soit un élément rapporté implanté dans un radar imageur SAR, soit un élément implanté dans un engin spatial ou aéroporté et capable de contrôler le fonctionnement d'un radar imageur SAR embarqué, soit encore le radar imageur lui-même.

Grâce à l'invention, une augmentation de la longueur de la zone d'observation d'un facteur 2, voire même 3, peut être obtenue. Bien entendu, cette augmentation dépend de la dégradation de résolution tolérée, et des durées nominales d'acquisition.

L'invention ne se limite pas aux modes de réalisation de dispositif D, de radar imageur SAR et d'engin spatial ou aéroporté décrits ci-avant, seulement à titre d'exemple, mais elle englobe toutes les variantes que pourra envisager l'homme de l'art dans le cadre des revendications ci-après.

Ainsi, dans ce qui précède on a décrit un dispositif selon l'invention embarqué sur un petit satellite d'observation équipé d'un radar imageur SAR. Mais, ce dispositif peut être embarqué sur tout type d'engin spatial ou aéroporté et notamment dans des avions ou des navettes spatiales. Il peut en outre faire partie du radar imageur ou bien constituer un radar imageur.

## Revendications

1. Dispositif (D) de mise en oeuvre d'un radar imageur à synthèse d'ouverture, embarqué sur un engin (S) et comprenant une antenne radar (A) propre à observer une zone suivant une ligne de visée radar (LV) définie à chaque instant par un angle au nadir et un azimut, **caractérisé en ce qu'**il comprend des moyens de commande (MC) agencés, lors de chaque phase d'acquisition du radar imageur, survenant pendant un défilement dudit engin (S) dans une direction choisie (X-X'), pour faire varier de l'arrière vers l'avant de l'engin (S) l'azimut de la ligne de visée radar (LV) par rapport à ladite direction de défilement (X-X'), de manière à permettre l'obtention d'une image, de la zone observée, étendue suivant ladite direction de défilement.

2. Dispositif selon la revendication 1, **caractérisé en ce que** lesdits moyens de commande (MC) sont agencés pour adresser à des moyens de positionnement (M) dudit engin (S) des instructions destinées à modifier son attitude dans l'espace de manière à faire varier ledit azimut.

3. Dispositif selon l'une des revendications 1 et 2, **caractérisé en ce que** lesdits moyens de commande (MC) sont agencés pour ordonner le dépointage de ladite antenne (A) de manière à faire varier ledit azimut.

4. Dispositif selon la revendication 3, **caractérisé en ce que** lesdits moyens de commande (MC) sont agencés pour adresser à des moyens de contrôle de l'orientation de l'antenne (MP) des instructions destinées à modifier mécaniquement ledit dépointage, au moins en partie.

5. Dispositif selon l'une des revendications 1 à 4, **caractérisé en ce que** ladite antenne (A) est une antenne réseau à balayage électronique.

6. Dispositif selon la combinaison des revendications 3 et 5, **caractérisé en ce que** lesdits moyens de commande (MC) sont agencés pour adresser à des moyens de contrôle de ladite antenne (A) des instructions destinées à modifier électroniquement ledit dépointage, au moins en partie.

7. Dispositif selon l'une des revendications 5 et 6, **caractérisé en ce qu'**il est agencé pour faire fonctionner ledit radar imageur en mode dit « Scansar ».

8. Dispositif selon l'une des revendications 1 à 6, **caractérisé en ce qu'**il est agencé pour faire fonctionner ledit radar imageur selon un angle au nadir de sa ligne de visée radar sensiblement constante.

9. Radar imageur à synthèse d'ouverture, propre à être embarqué sur un engin (S) et comprenant une antenne radar (A) propre à observer une zone suivant une ligne de visée radar (LV) définie par un angle au nadir et un azimut, **caractérisé en ce qu'**il comprend un dispositif (D) selon l'une des revendications précédentes.

10. Engin (S), **caractérisé en ce qu'**il comprend au moins un radar imageur à synthèse d'ouverture selon la revendication 9.

11. Engin (S), **caractérisé en ce qu'**il comprend au moins un radar imageur à synthèse d'ouverture couplé à un dispositif selon l'une des revendications 1 à 8.

12. Engin selon l'une des revendications 10 et 11, **caractérisé en ce qu'**il est agencé sous la forme d'un engin spatial ou aéroporté.

13. Engin selon la revendication 12, **caractérisé en ce qu'**il est agencé sous la forme d'un satellite d'observation.
